# EUROPEAN PATENT APPLICATION

(11) **EP 2 037 648 A2**
(43) Date of publication of application: **18.03.2009**
(21) Application number: 08159788.2
(22) Date of filing: 07.07.2008
(51) Int. Cl.: H04L 27/26

(54) **Digital broadcast wave analyzing apparatus**

(30) Priority: 06.07.2007 JP 2007178959
(71) Applicant: Anritsu Company, Morgan Hill, CA 95037-2809 (US)
(72) Inventor: Miyazaki, Chikako c/o Anritsu Corporation, Kanagawa Kanagawa 243-8555 (JP); Ikeya, Tomohito c/o Anritsu Corporation, Kanagawa Kanagawa 243-8555 (JP); Maruyama, Tatsuya c/o Anritsu Corporation, Kanagawa Kanagawa 243-8555 (JP)
(74) Representative: Pautex Schneider, Nicole Véronique

(57) **Abstract**

Disclosed is a digital broadcast wave analyzing apparatus capable of preventing the measured result from varying depending on a measurer and easily corresponding to a variation inmultipath characteristics.

An embodiment of the invention provides a digital broadcast wave analyzing apparatus that receives an OFDM digital broadcast wave, detects a symbol timing from the received signal, extracts signal strings from a signal string of the symbol at predetermined window positions, and performs a process required to analyze the digital broadcast wave on the extracted signal strings. The apparatus includes: an optimum window position selecting unit 31 that extracts signal strings from a signal string of a symbol for the signal that is received at a specific timing at a plurality of different predetermined window positions, calculates the modulation error ratio of each of the extracted signal strings, and selects a window position where the highest modulation error ratio is obtained as an optimum window position. A process of calculating a delay profile is performed on the signal string that is extracted at the selected optimum window position.

## Description

### BACKGROUND OF THE INVENTION

### 1. Field of the Invention

The present inventionrelates to a technique for accurately and easily analyzing an OFDM (orthogonal frequency division multiplexing) digital broadcast wave used as, for example, a terrestrial digital broadcast wave.

### 2. Description of the Related Art

Terrestrial analog broadcasting in a VHF band and a UHF band that is currently used will be completely replaced with terrestrial digital broadcasting until 2011, which has started in some areas since 2003. That is, it is expected that a terrestrial digital broadcasting service will be provided to the entire country until 2011.

The terrestrial digital broadcasting uses an OFDM radio wave in the UHF band. When the terrestrial analog broadcasting is replaced with the terrestrial digital broadcasting in an area where a terrestrial analog broadcasting signal in the VHF band is received, it is necessary to check the transmission conditions of a transmission path from a broadcasting station to the receiving area.

Delay measurement has been known as one of the main measurement items of the transmission conditions.

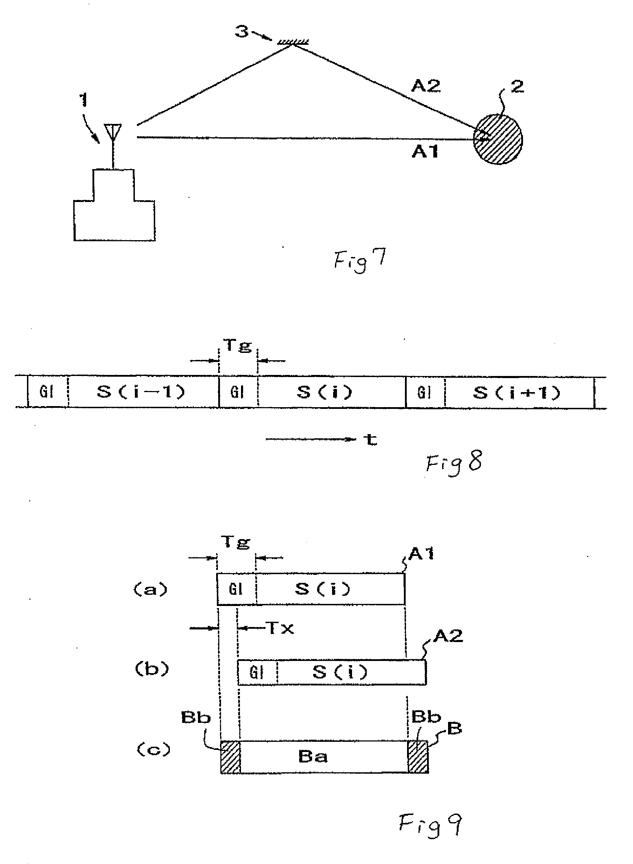

As shown in Fig. 7, the delay measurement is performed by detecting the difference between the level and arrival timing of a direct wave A1 that is directly transmitted from a broadcasting station 1 to an area 2 and the level and arrival timing of adelaywaveA2 that is transmitted from the broadcasting station 1 and reflected from a reflector 3 to the area 2. In general, characteristics of the difference between the levels and the arrival timings of the signals A1 and A2 are called a delay profile.

In the terrestrial digital broadcasting, in order to prevent images received through multipaths from deteriorating, as shown in Fig. 8, a signal component, which is called a guard interval GI, is inserted into each symbol S (i) forming the OFDM signal in a predetermined time width Tg from the head of the symbol.

The guard interval GI is the same signal component as that with a time width Tg which is at the end of a valid symbol continued to the guard interval. This redundant signal component makes it possible to accurately demodulate data even when a delay wave that is delayed from the direct wave within the range of the time width Tg is received.

For example, when the delay wave A2 shown in (b) of Fig. 9 that has a low level and is delayed from the direct wave Al having a high level, which shown in (a) of Fig. 9, by a time Txisreceived, as shown in (c) of Fig. 9, asymbolnon-interference portion Ba in which the signals having the same symbol of the direct wave A1 and the delay wave A2 are synthesized with each other and symbol interference portions Bb in which the signals having different symbols are synthesized with each other appear in turn, in a composite wave B of the two waves. A predetermined process can be performed on a signal string in the symbol non-interference portion Ba in which the signals having a strong correlation therebetween are synthesized with each other to accurately calculate a delay profile.

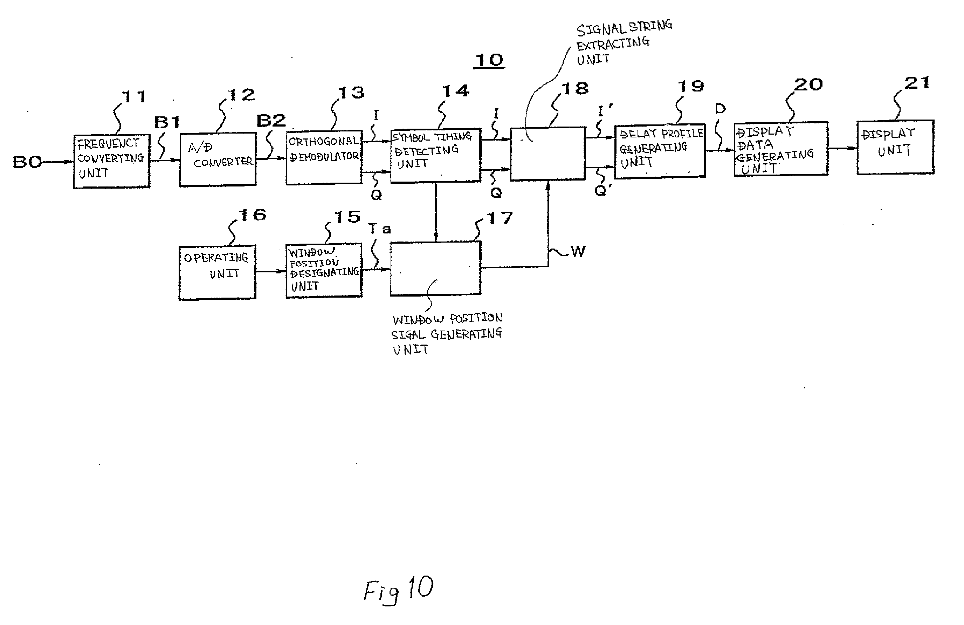

Fig. 10 is a diagram illustrating aportionof the structure of a digital broadcast wave analyzing apparatus 10 based on the above-mentioned principle.

The digital broadcast wave analyzing apparatus 10 receives an OFDM signal of a channel to be measured from a signal B0 that is input through, for example, an antenna (not shown) , converts the received signal into a predetermined intermediate frequency band signal B1 using a frequency converting unit 11, and converts the intermediate frequency band signal B1 into a digital signal B2 using an A/D converter 12.

An orthogonal demodulator 13 performs an orthogonal demodulating process on the digital signal B2, and outputs baseband signals I and Q.

A symbol timing detecting unit 14 receives the baseband signals I and Q and detects the input timing of a specific position (in this case, the head) of a symbol forming the OFDM signal.

The window position designating unit 15 designates a value set by the operation of an operating unit 16 as the start timing Ta of a signal extracting process on the symbol, which will be described below, to a window position signal generating unit 17.

A window position signal generating unit 17 outputs a window position signal W of a predetermined time width Tw after a time Ta has elapsed after a reference timing, which is the input timing of the head of the symbol detected by the symbol timing detecting unit 14, to a signal string extracting unit 18.

The signal string extracting unit 18 outputs signal strings I' and Q' that are input while receiving the window position signal W from the window position signal generating unit 17, among the signal strings of the input baseband signals I and Q.

A delay profile generating unit 19 extracts transmission path characteristics from, for example, a payload signal that is included in the symbol using Fourier transform corresponding to the signal strings I' and Q' extracted by the signal string extracting unit 18, and generates a delay profile indicating the difference between the levels and arrival timings of signal components that are included in the input signal B0, which is a measurement target, and are transmitted from the same source through different paths at different timings, using inverse Fourier transform processing to the transmission path characteristics.

A display data generating unit 20 generates display data of the waveform of the delayprofile generated by the delayprofile generating unit 19 in the orthogonal coordinate system in which the horizontal axis indicates time and the vertical axis indicates a level, and displays the generated data on a display unit 21 such that the waveform of an incoming wave having the highest level is displayed at a predetermined position.

Next, the operation of the apparatus 10 will be described below.

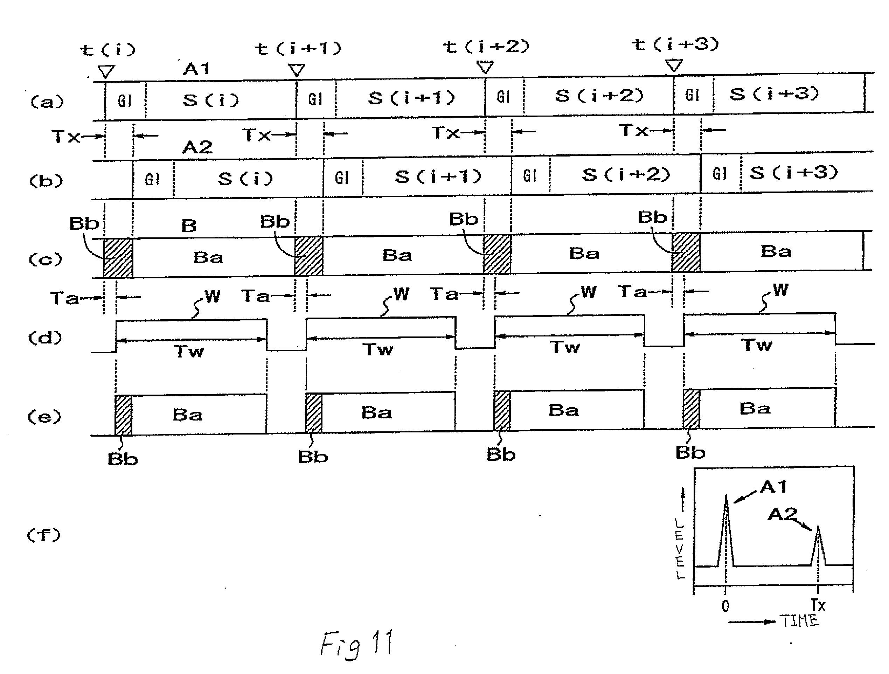

It is assumed that a composite wave B, shown in (c) of Fig. 11, of the direct wave A1 shown in (a) of Fig. 11 and the delay wave A2 shown in (b) of Fig. 11 is used as the input signal B0 (Fig. 10) and the level of the direct wave A1 is higher than that of the delay wave A2.

The composite wave B is converted into the intermediate frequency band signal B1 (Fig. 10) by the frequency converting unit 11, and the intermediate frequency band signal B1 is converted into the digital signal B2 (Fig. 10) by the A/D converter 12. Then, the digital signal B2 is converted into the baseband signals I and Q by the orthogonal demodulator 13, and the symbol timing detecting unit 14 detects a reference timing t(i) corresponding to a symbol head position, as shown in (a) and (c) of Fig. 11. The detected reference timing is extracted data corresponding to the time width of the guard interval GI. When sliding correlation is performed on the original data, the extracted data used when the largest correlation value is obtained is detected so as to correspond to the head position of the symbol of the direct wave A1 having the highest signal level.

When the window position designating unit 15 designates the extraction start timing Ta (window position) of the signal string in the reference timing t (i) , the window position signal generating unit 17 generates a window position signal W with a predetermined width Tw (for example, a width corresponding to the length of a valid symbol) after the time Ta has elapsed from the reference timing t(i) , as shown in (d) of Fig. 11, and outputs the generated signal to the signal string extracting unit 18. Then, as shown in (e) of Fig. 11, the signal string extracting unit 18 extracts the signal strings T' and Q' while the window position signal W is output, and outputs the signal strings to the delay profile generating unit 19.

The above process is performed on four continuous symbols S(i) to S(i+3) to obtain signal strings required to accurately extract transmission path characteristics. The delay profile generating unit 19 receiving the signal strings generates a delay profile indicating a difference Tx between the levels and arrival timings of the direct wave A1 and the delay wave A2, respectively, as shown in (f) of Fig. 11.

For example, the display data generating unit 20 averages data of the delay profile, and the display unit 21 displays the data such that the direct wave A1 having the highest level is displayed at a predetermined position on the time axis.

The above-mentioned technique for generating and displaying the delay profile of an OFDM signal used for the terrestrial digital broadcasting has been proposed in, for example, Japanese Unexamined Patent Application Publication No. 2004-236076.

In the above-mentioned structure, since the window position Ta is before the delay time Tx, the head of the extracted signal string is included in the symbol interference portion Bb in which signal components of different symbols are synthesized with each other. Therefore, when the window overlaps with the symbol interference portion Bb, the generation accuracy of the delay profile is lowered, and the noise floor of the displayed delay profile increases.

It is preferable to fix the window position for signal extraction to the head of a valid symbol of the direction wave A1 having the highest level, in order to remove the influence of the symbol interference portion Bb.

However, in recent years, a single frequency network (SFN) system using both a high-power broadcasting station and a low-power broadcasting station to reduce a dead area has been proposed in addition to a broadcasting system that uses a high-power broadcasting station to cover a wide service area. In the SFN system, after an incoming wave having a low level is received from the low-power broadcasting system, an incoming wave having a high level is received from the high-power broadcasting system.

However, as described above, when the window position is aligned with the head of the valid symbol of the incoming wave having the highest level in the area where the incoming wave having a low level is received earlier than the incoming wave having a high level, the next symbol signal overlaps the end of the signal extracted therefrom and a symbol interference portion is generated. As a result, the accuracy of measurement is lowered.

In the apparatus according to the related art, in order to solve the above problems, a measurer operates the operating unit 16 to change the extraction start timing Ta (windowposition) of the signal string to minimize the noise floor of the waveform of the displayed delay profile. However, in the method of allowing the measurer to operate the operating unit to minimize the noise floor of the waveform of the displayed delay profile, the measured result depends on the measurer.

Further, it is difficult to rapidly correspond to a variation in multipath characteristics due to a variation in a radio path (for example, a variation in reflectance due to the movement and vibration of a reflector or changes in the weather) .

### SUMMARY OF THE INVENTION

The invention has been made in order to solve the above problems, and an object of the invention is to provide a digital broadcast wave analyzing apparatus capable of rapidly correspond to a variation in multipath characteristics and preventing the measured result from varying depending on a measurer.

Further, the invention has been made paying attention to the fact that the quality of a broadcast wave including, for example, the noise floor of the waveform of a delay profile corresponds to the modulation accuracy of a received signal, and the above object is attained by setting a window position where the highest modulation error ratio is obtained as an optimum window position for extracting a signal string used for an analysis process.

In order to achieve the obj ect, according to a first aspect of the invention, there is provided a digital broadcast wave analyzing apparatus that receives an OFDM digital broadcast wave, detects a symbol timing from the received signal, extracts signal strings from a signal string of the symbol at predetermined window positions, and performs a process required to analyze the digital broadcast wave on the extracted signal strings. The apparatus includes an optimum window position selecting unit 31 that extracts signal strings from a signal string of a symbol for the signal that is received at a specific timing at a plurality of different predetermined window positions, calculates the modulation error ratio of each of the extracted signal strings, and selects a window position where the highest modulation error ratio is obtained as an optimum window position.

According to a second aspect of the invention, in the digital broadcast wave analyzing apparatus according to the first aspect, preferably, the process required to analyze the digital broadcast wave is performed on the signal string that is extracted from the signal string of the symbol for the signal received at the specific timing at the optimum window position selected by the optimum window position selecting unit.

According to a third aspect of the invention, in the digital broadcast wave analyzing apparatus according to the first aspect, preferably, the process required to analyze the digital broadcast wave is performed on a signal string that is extracted from a signal string of a symbol for a signal received after the specific timing at the optimum window position selected by the optimum window position selecting unit.

According to a fourth aspect of the invention, in the digital broadcast wave analyzing apparatus according to any one of the first to third aspects, preferably, the optimum window position selecting unit performs the selecting process at the optimum window position, using the timing before the extraction of the signal strings used for the analysis process or the timing after a predetermined time has elapsed during a period for which the signal strings used for the analysis process are continuously extracted at the optimum window position as the specific timing.

According to a fifth aspect of the invention, in the digital broadcast wave analyzing apparatus according to any one of the first to fourth aspects, preferably, the optimum windowposition selecting unit continuously calculates the modulation error ratio of the signal string extracted at the optimum window position that is selected for the process required to analyze the digital broadcast wave, and selects the optimum window position using the timing when the calculated modulation error ratio is lower than a predetermined reference value as the specific timing.

According to a sixth aspect of the invention, in the digital broadcast wave analyzing apparatus according to any one of the first to fifth aspects, preferably, a process of calculating a delay profile indicating a difference between the levels and arrival timings of the incoming waves included in the received digital broadcast wave is performed on the signal string that is extracted at the optimum window position selected by the optimum window position selecting unit.

The digital broadcast wave analyzing apparatus according to the above-mentioned aspects includes the optimum window position selecting unit 31 that extracts signal strings from a signal string of a symbol for the signal that is received at a specific timing at a plurality of different predetermined window positions, calculates the modulation error ratio of each of the extracted signal strings, and selects a window position where the highest modulation error ratio is obtained as an optimum window position.

According to the above-mentioned structure, it is possible to perform signal extraction at the optimum window position while minimizing the influence of the symbol interference portion. As a result, it is possible to performan accurate analysis process while preventing the measured result from varying depending on a measurer or due to the surrounding environment.

Further, it is possible to accurately perform the analysis process without being affected by a variation in multipath characteristics, when a reselecting process is performed at the optimum window position, using any of the following timings as the specific timing: the timing before the extraction of the signal strings used for the analysis process; the timing after a predetermined time has elapsed during a period for which the signal strings used for the analysis process are continuously extracted at the optimum window position; or when the modulation error ratio of the signal string extracted at the optimum window position that is selected for the process required to analyze the digital broadcast wave is continuously calculated, the timing when the calculated modulation error ratio is lower than a predetermined reference value.

Furthermore, a process of calculating a delay profile indicating a difference between the levels and arrival timings of the incoming waves included in the digital broadcast wave is performed on the signal string that is extracted at the optimum window position selectedby the optimumwindowposition selecting unit. According to the above-mentioned structure, it is possible to accurately calculate a delay profile without depending on a measurer and being affected by a variation in multipath characteristics.

### BRIEF DESCRIPTION OF THE DRAWINGS

Fig. 1 is a diagram illustrating the structure of an embodiment of the invention;
Fig. 2 is a flowchart illustrating a processing sequence of a main part according to the embodiment of the invention;
Fig. 3 is a diagram illustrating the operation of the embodiment of the invention;
Fig. 4 is a diagram illustrating the operation of the embodiment of the invention;
Fig. 5 is a flowchart illustrating another processing sequence of the main part according to the embodiment of the invention;
Fig. 6 is a diagram illustrating the structure of another embodiment of the invention;
Fig. 7 is a diagram illustrating multipaths;
Fig. 8 is a diagram illustrating the format of an OFDM signal;
Fig. 9 is a diagram illustrating the relationship between a plurality of incoming waves and a composite wave;
Fig. 10 is a diagram illustrating the structure of an apparatus according to the related art;
Fig. 11 is a diagram illustrating the operation of the apparatus according to the related art; and

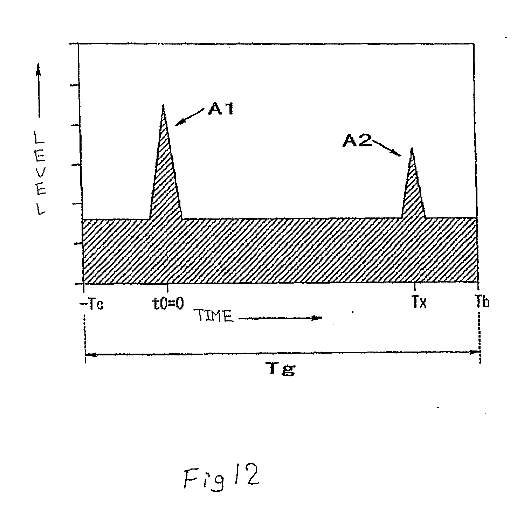

Fig. 12 is a diagram illustrating an example of the display of the measured result by the apparatus according to the related art.

### DETAILED DESCRIPTION OF THE INVENTION

Hereinafter, exemplary embodiments of the invention will be described with reference to the accompanying drawings.

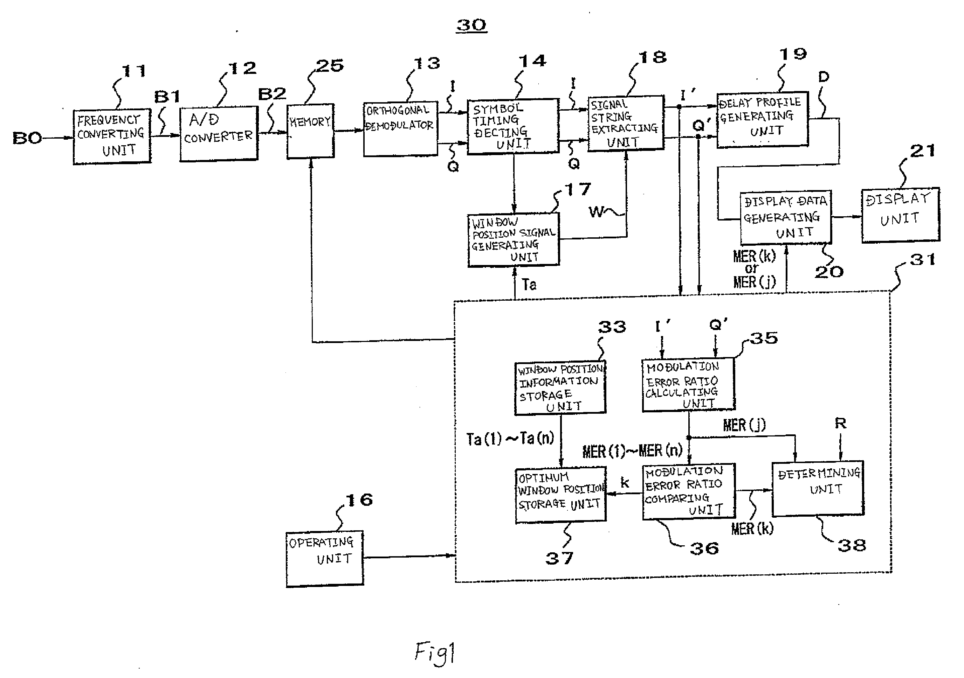

Fig. 1 is a diagram illustrating the structure of main parts of a digital broadcast wave analyzing apparatus 30 according to an embodiment of the invention

The digital broadcast wave analyzing apparatus 30 receives an OFDM digital broadcast wave of a desired channel, which is an analysis target, detects symbol timing from the received signal, extracts signal strings from a signal string of the symbol at a designated window position, and performs a calculation required to analyze the digital broadcast wave on the extracted signal strings. In this embodiment, it is assumed that the digital broadcast wave analyzing apparatus calculates a delay profile indicating a difference between the levels and arrival times of incoming waves included in the digital broadcast wave to be analyzed.

As shown in Fig. 1, the digital broadcast wave analyzing apparatus 30 includes a frequency converting unit 11, an A/D converter 12, an orthogonal demodulator 13, a symbol timing detecting unit 14, an operating unit 16, a window position signal generating unit 17, a signal string extracting unit 18, a delay profile generating unit 19, a display data generating unit 20, and a display unit 21, similar to the apparatus 10 according to the related art.

The frequency converting unit 11 receives a digital broadcast wave of a desired channel from a signal B0 that is input through, for example, an antenna (not shown), converts the signal into a predetermined intermediate frequency band signal B1. Then, the A/D converter 12 converts the intermediate frequency band signal B1 into a digital signal B2 , and the memory 25 temporarily stores the digital signals corresponding to several symbols.

The orthogonal demodulator 13 performs orthogonal demodulation on the digital signal B2 stored in the memory 25, and outputs baseband signals I and Q. The memory 25 may store the signals I and Q output from the orthogonal modulator 13.

The symbol timing detecting unit 14 receives the baseband signals I and Q and detects the input timing of the head of each symbol forming an OFDM signal, as described above.

The window position signal generating unit 17 outputs a window position signal W(k) corresponding to a window position Ta (k) that is designated by an optimum window position selecting unit 31, which will be described below, to the signal string extracting unit 18, using the input timing of the head of the symbol detected by the symbol timing detecting unit 14 as a reference timing.

The signal string extracting unit 18 outputs signal strings I' and Q' that are input while receiving the window position signal W (k) from the window position signal generating unit 18, among the signal strings of the input baseband signals I and Q.

The delay profile generating unit 19 extracts transmission path characteristics from, for example, a pilot signal that is included in the symbol by Fourier transform corresponding to the signal strings I' and Q' extracted by the signal string extracting unit 18, and generates a delay profile indicating the difference between the levels and arrival timings of the signal components that are included in the input signal B0, which is a measurement target, and are transmitted from the same source through different paths at different timings, using inverse Fourier transform processing to the transmission path characteristics.

The display data generating unit 20 generates display data of the waveform of the delay profile generated by the delay profile generating unit 19 in the orthogonal coordinate system in which the horizontal axis indicates time and the vertical axis indicates a level, and displays the generated data on the display unit 21 such that the waveform of an incoming wave having the highest level is displayed at a predetermined position. In addition, the display data generating unit 20 can display a modulation error ratio MER (k) corresponding to the optimum window position selected by the optimum window position selecting unit 31, which will be described below, or a modulation error ratio MER(j) that is obtained during measurement on the display unit 21.

The digital broadcast wave analyzing apparatus 30 is provided with the optimum window position selecting unit 31 that automatically sets the optimum window position for extracting a signal string used for an analysis process.

The optimum window position selecting unit 31 includes a windowposition information storage unit 33 , a modulation error ratio calculating unit 35, a modulation error ratio comparing unit 36, an optimum window position storage unit 37, and a determining unit 38.

A plurality (n number of) of different window positions Ta (1) to Ta (n) are set in the window position information storage unit 33 beforehand. The window positions Ta(1) to Ta(n) can be set within the width range of a guard interval GI of a symbol, which is a measurement target, so as to correspond to the length thereof. In this embodiment, it is assumed that the width Tw of each window is equal to the length of a valid symbol.

For example, when the length of the guard interval GI is a quarter of the length of the valid symbol, five windowpositions Ta (1) to Ta (5) that are respectively shifted from the head of the symbol by 0/4, 1/4, 2/4, 3/4, and 4/4 of the length of the guard interval GI are designated as the window positions Ta.

The number of window positions and the intervals therebetween are not particularly limited to the above. For example, six or more window positions may be set. In addition, when the window position that is aligned with the head of the symbol or the head of the valid symbol is used, the previous symbol or the subsequent symbol may overlap the window due to timing deviation (for example, timing mismatch), which results in a significant reduction in measurement accuracy. Therefore, the window position that is aligned with the head of the symbol and the head of the valid symbol may be omitted.

The optimum window position selecting unit 31 extracts signal strings from the signal string of the symbol detected from the signal B2 (or the signals I and Q) , which has been received at a specific timing and temporarily stored in the memory 25, at a plurality of different window positions Ta(1) to Ta (n) that are stored in the window position information storage unit 33. Then, the modulation error ratio calculating unit 35 calculates the modulation error ratio of each of the extracted signal strings D (1) to D (n) , and the modulation error ratio comparing unit 36 compares the calculated modulation error ratios MER (1) toMER (n). The window position Ta(k) where the highest modulation error ratio MER (k) is obtained is selectedas an optimum window position, and the optimum window position is stored in the optimum window position storage unit 37.

The specific timingmeans the time when the windowposition is improper due to a variation in multi-paths or whenever a predetermined time has elapsed, in addition to the timing when measurement starts.

The modulation error ratio MER is a value indicating the modulation quality of a digital modulation signal, and is a value indicating the relationship between a symbol position that is actually detected and a theoretical symbol position on a constellation determined by a modulation method. The modulation error ratio MER is calculated by the ratio of carrier power Pc to noise power Pn (Pc/Pn). As the error of the symbol position is reduced, the value of the modulation error ratio MER increases.

Actually, the modulation error ratio is calculated by performing Fourier transform on demodulated data to extract a sub carrier and calculating the power ratio. However, since this calculation process has been known (for example, Japanese Unexamined Patent Application Publication No. 2002-124931), a detailed description there of will be omitted.

Further, the modulation error ratio calculating unit 35 continuously calculates the modulation error ratio of a signal string that is extracted from the signal received after a specific timing at the optimum window position Ta(k), and outputs the extracted signal string to the determining unit 38. The determining unit 38 determines whether the modulation error ratio calculated by the modulation error ratio calculating unit 35 is lower than a predetermined reference value R.

Whenever the modulation error ratio that is lower than the reference value R is calculated, the optimum window position. selecting unit 31 selects the optimum window position and updates the optimum window position.

It is preferable that the reference value R be a value depending on the modulation error ratio MER(i) corresponding to the previously selected optimum window position, such as a fixed value determined according to reception environments, a value obtained by subtracting an allowable reduction amount Δr from the modulation error ratio MER(i) corresponding to the previously selected optimum window position, or a value obtained by multiplying the modulation error ratio MER (i) by an allowable reduction rate α.

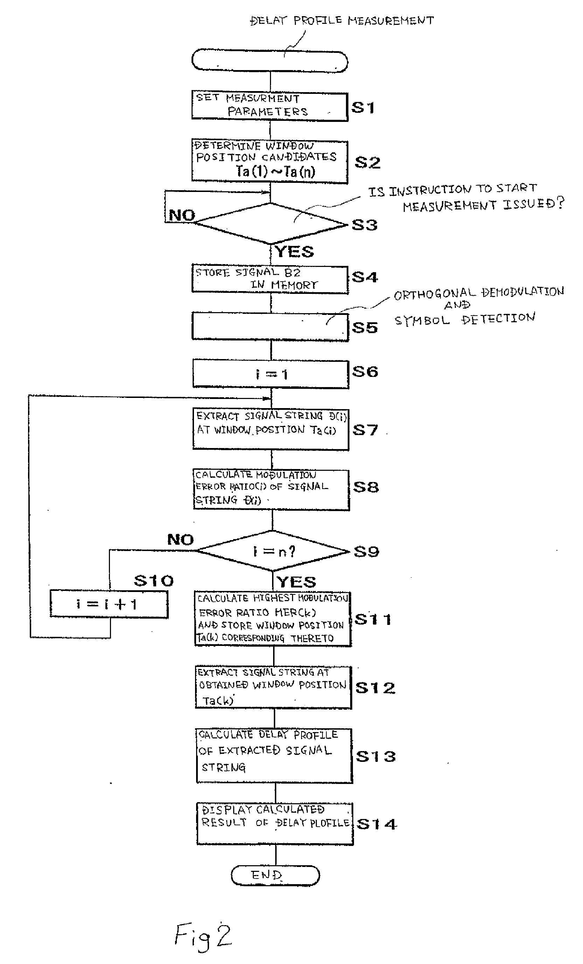

Fig. 2 is a flowchart illustrating the processing sequence of the optimum window position selecting unit 31. The operation of the digital broadcast wave analyzing apparatus 30 will be described below with reference to the flowchart.

First, parameters for an OFDM digital broadcast wave (for example, a symbol length and a GI length) are set (S1). The candidates of the optimum window positions, for example, Ta(1) to Ta(5) are determined by the setting (S2).

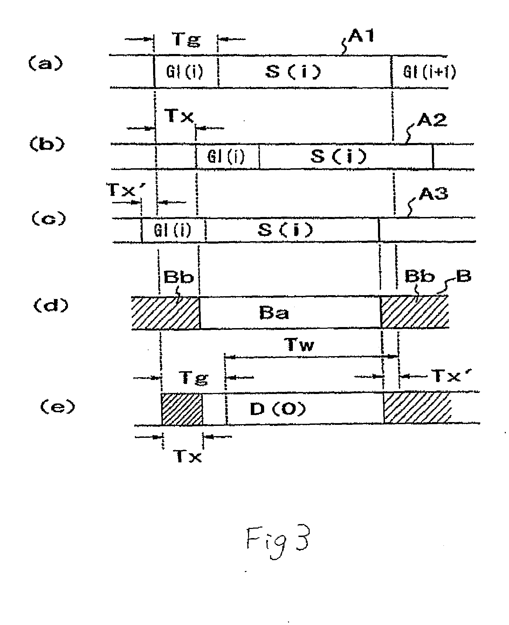

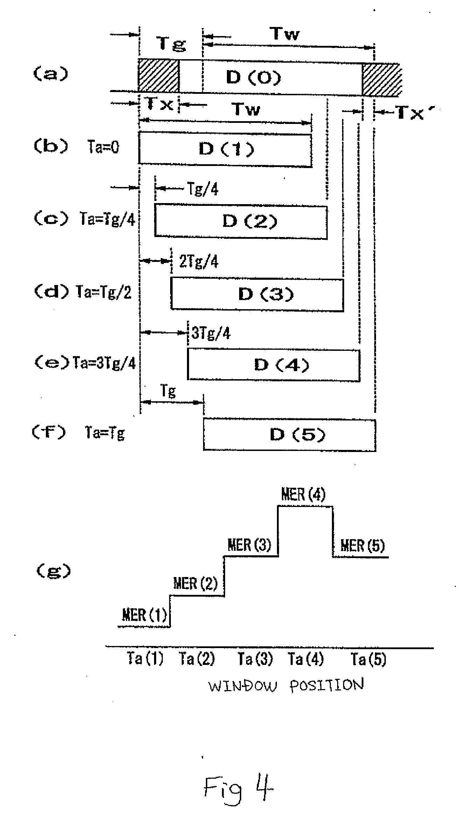

When measurement is instructed to start at the timing when a composite wave B of an incoming wave A1 having the highest level shown in (a) of Fig. 3, an incoming wave A2 that is delayed from the incoming wave A1 by a time Tx within the width Tg of the guard interval GI, which is shown in (b) of Fig. 3, and an incoming wave A3 that leads the incoming wave A1 by a time Tx' within the width Tg of the guard interval GI, which is shown in (c) of Fig. 3, is input as shown in (d) of Fig. 3 (S3), the signal B2 corresponding to several symbols are stored in the memory 25 (S4). Then, an orthogonal demodulating process and a symbol detecting process are performed on the signal (S5), and a signal string D(0) shown in (e) of Fig. 3 and (a) of Fig. 4 is obtained.

Then, as shown in (b) to (f) of Fig. 4, signal strings D(1) to D(5) are extracted from the signal string D(0) shown in (a) of Fig. 4, at the window positions Ta(1) to Ta(5) that are respectively shifted from the signal string D(0) by 0/4, 1/4, 2/4, 3/4, and 4/4 of the width Tg of the guard interval GI, and the modulation error ratio (MER) of each of the signal strings D(1) to D(5) is calculated (S6 to S10).

As the area of an overlap region of the window and front and rear symbol interference portions Bb where symbol data is synthesized in the signal string D(0) increases, modulation quality is lowered due to the composition of data having phases and amplitudes that are not correlated with each other, and the value of the modulation error ratio MER decreases. When the window overlaps with only a symbol non-interference portion Ba, the highest modulation quality is obtained, and the highest modulation error ratio MER is obtained.

In Fig. 4, (g) shows an example of a variation in the modulation error ratio MER, in which a modulation error ratio MER(4) becomes maximum (k = 4) at the window position Ta(4). The window position Ta(4) where the highest modulation error ratio MER (4) is obtained is stored as the optimum window position (S11) .

In this way, the window position Ta(k) that is selected as the optimum window position is input to the window position signal generating unit 17, In the subsequent measuring process, signal extraction is performed at the window position Ta(k), and a delay profile for the digital broadcast wave is generated. Then, the generated delay profile is displayed on the display unit 21 (S12 to S14).

Therefore,asdescribed above,the optimum window position selecting unit 31 automatically sets the optimum window position for a digital broadcast wave, which is an analysis target, only by setting measurement conditions (for example, a measurement channel and a modulation method) beforehand, and a delay profile for the signal string extracted at the set window position is generated. Then, the delay profile is displayed. Therefore, there is no variation in the result measured by a measurer, and thus it is possible to perform accurate measurement without depending on the measurer.

The digital broadcast wave analyzing apparatus 30 can select a s ingle-shot measurement mode or a continuous measurement mode. When the single-shot measurement mode is selected, as shown in Fig. 2, the digital broadcast wave analyzing apparatus 30 performs signal extraction on the signal string D (0) obtained from the signal B2 that is initially stored in the memory 25 (or the signal string D(0) obtained from the signal B2 that is stored in the memory 25 immediately after the optimum window position is selected) at the optimum window position Ta(k) obtained by the selection process, to calculate a delay profile, and displays the delay profile. Then, the digital broadcast wave analyzing apparatus 30 ends the measuring process.

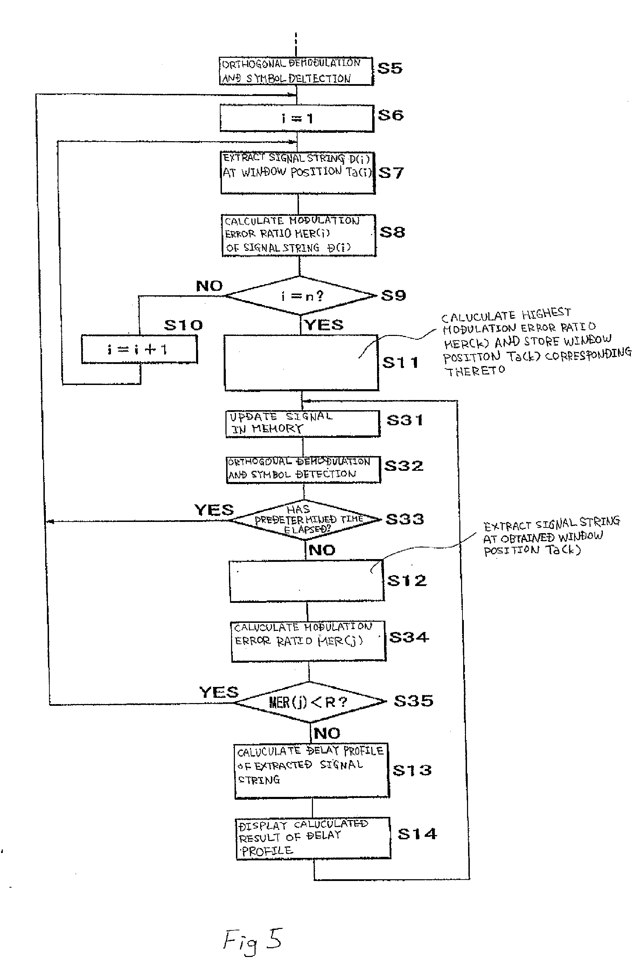

When the continuous measurement mode is selected, as shown in Fig. 5, the signals B2 stored in the memory 25 are sequentially updated (S31) , and the orthogonal demodulating process and the symbol detecting process are performed on the updated signal (S32). Then, the signal extracting process is sequentially performed on the signal strings obtained by the symbol detecting process at the optimum window position (S12), and the delay profiles of the signal strings obtained by the signal extracting process are sequentially calculated (S13). Then, the display of the delay profile is sequentially updated (S14).

However, in the continuous measurement mode, the optimum window position selecting unit 31 returns to Step S6 whenever a predetermined time has elapsed (S33) to reselect the optimum window position, thereby updating the optimum window position.

Further, the optimum window position selecting unit 31 continuously calculates the modulation error ratio of the signal string extracted at the optimum window position during the continuous measurement using the modulation error ratio calculating unit 35 (S34) , and compares the calculated modulation error ratio MER(j) with the reference value R (S3S). When the modulation error ratio MER(j) is less than the reference value R (when the modulation error ratio MER (j) is less than a fixed reference value, or it is more than the modulation error ratio MER (k) corresponding to the previously selected optimum window position), that is, when the window position is improper due to a variation in multipath characteristics, the optimum window position selectingunit returns to Step S6 to reselect the optimum window position, thereby updating the optimum window position.

Even when the multipath characteristics vary due to a variation in radio path (for example, the movement and vibration of a reflector or changes in the weather) during the continuous measurement, the process makes it possible to automatically set the optimum window position corresponding to the variation in multipath characteristics, and continuously measure an accurate delay profile without a special operation of the measurer.

This embodiment performs both the process of updating the optimum window position at a predetermined time interval and the process of updating the optimum window position when the value of the modulation error ratio decreases, but the invention is not limited thereto. Only one of the two update processes may be performed to update the optimum window position.

Further, in the above-mentioned operation, one modulation error ratio having the highest level is selected from among the modulation error ratios MER (1) to MER (n) obtained from the signal strings that are extracted at a plurality of window positions Ta (1) to Ta (n) . However, when there are few incoming waves that are delayed from or lead an incoming wave having the highest level in phase or when the level thereof is so low as to be negligible (the qualityof a broadcast wave is considerably high) , two or more modulation error ratios may have the highest level among the modulation error ratios MER(1) to MER(n). In this case, the window positions where the highest modulation error ratios MER are obtained may be selected according to a predetermined priority.

For example, among a plurality of window positions where the highest modulation error ratio is obtained, the window position that is distant from the head of the symbol and the head of the valid symbol and is close to an overlap portion of a symbol for an incoming wave having the highest level and a symbol for an incoming wave having the second highest level may be set as the optimum window position such that the measured result does not greatly vary due to little timing deviation.

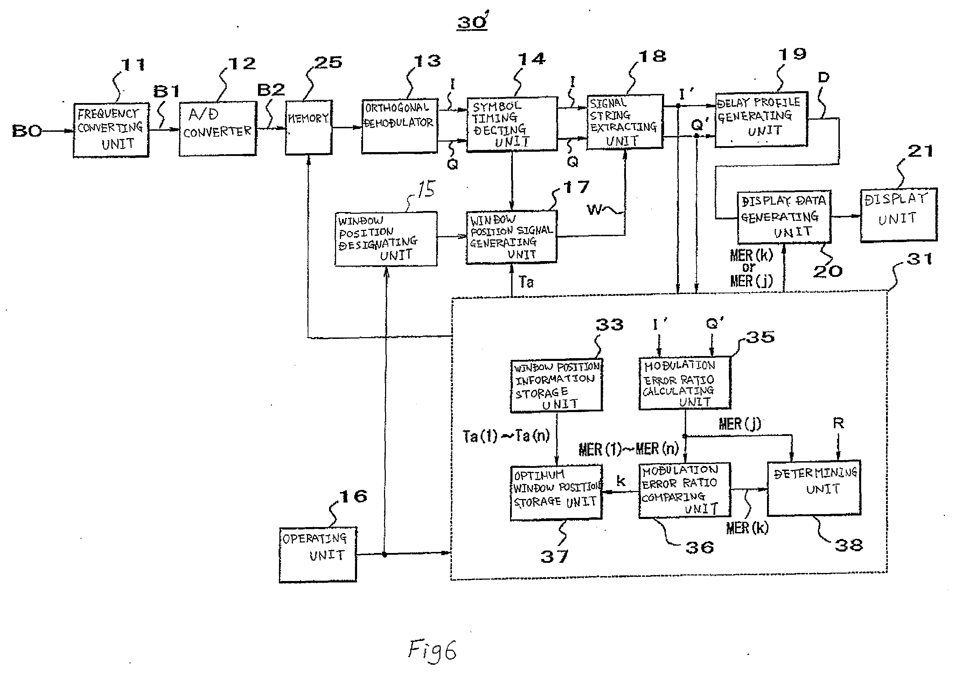

In the above-described embodiment, the optimum window position of a received digital broadcast wave is automatically selected, and a signal string required for an analysis process is extracted. However, the invention is not limited thereto. For example, as shown in Fig. 6 , a digital broadcast wave analyzing apparatus 30' may be provided with a window position designating unit 15 that provides information of the window position designated by the operation of the operating unit 16 to a window position signal generating unit 17, such that an automatic setting mode that automatically sets the optimum window position and a manual control mode that manually changes the window position can be switched, as described above.

Furthermore, in addition to the delay profile, the modulation error ratio and the bit error ratio (BER) of a digital broadcast wave may be analyzed. In this case, it is also possible to accurately analyze both the modulation error ratio and the bit error ratio, without depending on the measurer and regardless of a variation in multipaths, by selecting a window position where the highest modulation error ratio is obtained and performing an analysis process on the signal string that is extracted at the selected window position.

## Claims

1. A digital broadcast wave analyzing apparatus that receives an OFDM digital broadcast wave, detects a symbol timing from the received signal, extracts signal strings from a signal string of the symbol at predetermined window positions, and performs a process required to analyze the digital broadcast wave on the extracted signal strings, the apparatus including:
an optimum window position selecting unit (31) that extracts signal strings from a signal string of a symbol for the signal that is received at a specific timing at a plurality of different predetermined window positions, calculates the modulation error ratio of each of the extracted signal strings, and selects a window position where the highest modulation error ratio is obtained as an optimum window position.

2. The digital broadcast wave analyzing apparatus according to claim 1, **characterized in that**,
the process required to analyze the digital broadcast wave is performed on the signal string that is extracted from the signal string of the symbol for the signal received at the specific timing at the optimum window position selected by the optimum window position selecting unit (31).

3. The digital broadcast wave analyzing apparatus according to claim 1, **characterized in that**,
the process required to analyze the digital broadcast wave is performed on a signal string that is extracted from a signal string of a symbol for a signal received after the specific timing at the optimum window position selected by the optimum window position selecting unit (31).

4. The digital broadcast wave analyzing apparatus according to any one of claims 1 to 3, **characterized in that**,
the optimum window position selecting unit (31) selects the optimum window position, using the timing before the extraction of the signal strings used for the analysis process or the timing after a predetermined time has elapsed during a period for which the signal strings used for the analysis process are continuously extracted at the optimum window position as the specific timing.

5. The digital broadcast wave analyzing apparatus according to any one of claims 1 to 4, **characterized in that**,
the optimum window position selecting unit (31) continuously calculates the modulation error ratio of the signal string extracted at the optimum window position that is selected for the process required to analyze the digital broadcast wave, and selects the optimum window position using the timing when the calculated modulation error ratio is lower than a predetermined reference value as the specific timing.

6. The digital broadcast wave analyzing apparatus according to any one of claims 1 to 5, **characterized in that**,
a process of calculating a delay profile indicating a difference between the levels and arrival timings of incoming waves included in the received digital broadcast wave is performed on the signal string that is extracted at the optimum window position selected by the optimum window position selecting unit (31).
